# EUROPEAN PATENT APPLICATION

(11) **EP 1 933 529 A1**
(43) Date of publication of application: **18.06.2008**
(21) Application number: 07123200.3
(22) Date of filing: 14.12.2007
(51) Int. Cl.: H04L 29/06

(54) **Content distribution system by SIP(Session Initiation Protocol), content server side user terminal, content client side user terminal and authentication method**

(30) Priority: 15.12.2006 JP 2006339208
(71) Applicant: NEC CORPORATION, Tokyo (JP)
(72) Inventor: Nakamura, Kyoichi, Tokyo 108-8001 (JP)
(74) Representative: Betten & Resch

(57) **Abstract**

A system includes: a network including a SIP server, a content server side user terminal, connected to the aforementioned network and to content storage device and having a SIP control function of distributing playback content such as video, audio, etc., in the aforementioned content storage device by QoS band reservation; and a content server side user terminal, connected to the aforementioned network and motion picture reproducing device and having a SIP control function of outputting content such as video, audio, etc. distributed through the aforementioned network, to the aforementioned motion picture reproducing device or a display portion.

## Description

### BACKGROUND OF THE INVENTION

This application is based upon and claims the benefit of priority from Japanese patent application No. 2006-339208, filed on December 15, 2006, the disclosure of which is incorporated herein in its entirety by reference

### 1. Field of the Invention:

The present invention relates to a content distribution system, content server side user terminal, content client side user terminal and authentication method.

### 2. Description of the Related Art:

Conventionally, in systems that transmit and receive content such as video and the like by way of a network, connection between terminals has been controlled only between the terminals that are involved alone. Also, in such systems, remote control from a remote terminal has been done between the terminals alone. Further, in such systems, transmission of content has been carried out without regard to the condition of the transmission band of the network.

In a word, since in such a system, connection control between terminals and operation control from a remote terminal have been achieved between the terminals alone, there has been a problem that the service provider cannot understand the utilization status of the service. Here, examples of the utilization status of the service include user's usage frequency of the service and the like.

Also, since transmission of content has been practiced without regard to the traffic conditions of the network transmission band, when a large-sized data stream such as a video content etc, is transmitted, there is a possibility of data delay and packet loss occurring. This sometimes results in a problem that the content cannot be enjoyed without the occurrence of problem.

### SUMMARY OF THE INVENTION

It is therefore an object of the present invention to provide a content distribution system, content server side user terminal, content client side user terminal and authentication method which permit the service provider to grasp the utilization status of the service.

It is another object of the present invention to provide a content distribution system, content server side user terminal, content client side user terminal and authentication method which can distribute content in high quality.

It is another object of the present invention to provide a content distribution system, content server side user terminal, content client side user terminal and authentication method which can realize high security in control between terminals and in distributing contents.

A content distribution system of the present invention comprises: a network including a SIP server; a content server side user terminal connected to said network and a content storage device and controlled by SIP call control by way of said network for distributing content inside said content storage device using QoS that reserves a band; and a content client side user terminal connected to said network for controlling said content server side user terminal by SIP call control by way of said network and for receiving said distributed content to output the content.

A content server side user terminal of the present invention comprises: a SIP call controller for establishing a session with a content client side user terminal on a network including a SIP server, using the SIP call control function; and a communication controller for distributing content on said session, using QoS that reserves a band.

A content client side user terminal of the present invention comprises: a SIP call controller for establishing a session with a content server side user terminal on a network including a SIP server, using a SIP call control function; and a communication controller for receiving content from said content server side user terminal on said session, by using QoS that reserves a band.

According to the present invention, the content client side user terminal controls the content server side user terminal by SIP call control. Accordingly, it is possible for the service provider to check the utilization status of the service such as the frequency of reception of videos etc.

The above and other objects, features, and advantages of the present invention will become apparent from the following description with reference to the accompanying drawings which illustrate examples of the present invention.

### BRIEF DESCRIPTION OF THE DRAWINGS

FIG. 1 is a block diagram showing a content distribution system in one exemplary embodiment of the present invention;
FIG. 2 is a flow chart for illustrating an operation of a content distribution system of the exemplary embodiment;
FIG. 3 is a flow chart for illustrating another operation of a content distribution system of the exemplary embodiment;
FIG. 4 is a block diagram showing a content distribution system of the first embodiment of the present invention;
FIG. 5 is a sequence diagram for explaining the operation of a content distribution system of the first embodiment;
FIG. 6 is a sequence diagram for explaining the operation of a content distribution system of the first embodiment;
FIG. 7 is a block diagram showing a content distribution system of the second embodiment of the present invention;
FIG. 8 is a diagram showing user authentication and a method of sending a key using a mobile terminal of the second embodiment;
FIG. 9 is a sequence diagram for explaining the operation of a content distribution system of the second embodiment; and
FIG. 10 is a sequence diagram for explaining the operation of a content distribution system of the second embodiment.

### DETAILED DESCRIPTION OF THE PREFERRED EMBODIMENT(S)

### (Explanation of a configuration)

One exemplary embodiment of the present invention will be described in detail.

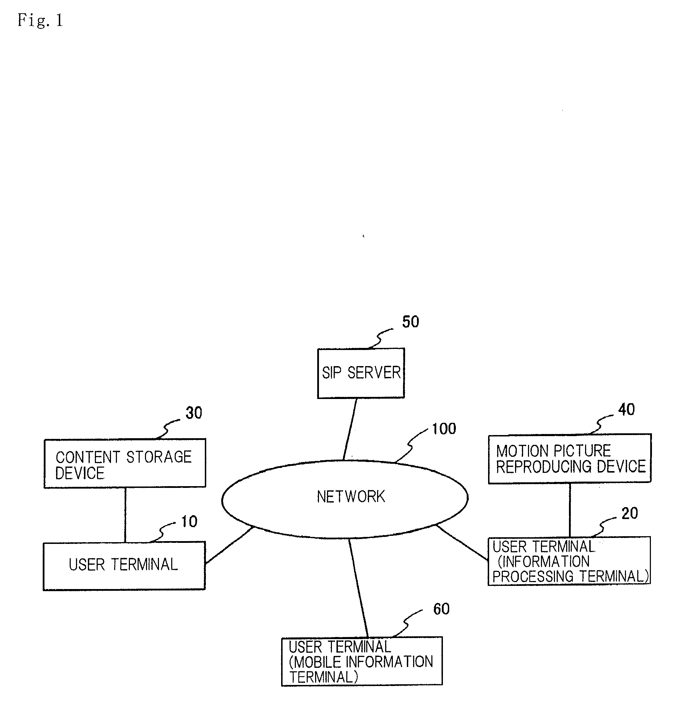

FIG. 1 is a block diagram showing a content distribution system of the exemplary embodiment.

In FIG. 1, the content distribution system includes user terminal 10, user terminal 20, content storage device 30, motion picture reproducing device 40 and user terminal 60.

User terminal 10 is one example of a content server side user terminal, whereas user terminals 20 and 60 are examples of content client side user terminals Content server side user terminal is user terminal on the content server side. Content client side user terminal is user terminal on the content client side.

User terminals 10, 20 and 60 are operated by programmed control. User terminals 10, 20 and 60 are controlled by QoS that guarantees a fixed communication speed by reserving a particular band for communication. Further, user terminals 10, 20 and 60 are connected to each other by way of network 100 (e.g., the internet) including SIP server 50 for providing call control using SIP (also called SIP call control). Further, user terminal 20 and motion picture reproducing device 40 are operated by programmed control and are connected to each other for transmission and reception of video and sound. User terminal 10 is connected to content storage device 30 to perform programmed control of content storage device 30.

User terminal 10 is, for example an information processing terminal such as a set-top box or the like. User terminal 10 is controlled by SIP call control from user terminal 20 by way of network 100 and transmits content from content storage device 30 to user terminal 20.

Further, user terminal 20 is, for example an information processing terminal such as a set-top box or the like. User terminal 20 controls user terminal 10 by SIP call control by way of network 100, receives content from user terminal 10 and outputs the content to motion picture reproducing device 40.

Motion picture reproducing device 40 outputs content from user terminal 20. Content storage device 30 records content. Also, content storage device 30 is program controlled from user terminal 10 and transmits its content to user terminal 10.

User terminal 60 is a mobile information terminal (mobile type information processing terminal). User terminal 60 includes a display portion. Also, user terminal 60 has functions of controlling user terminal 10 by SIP control by way of network 100, receiving content from user terminal 10 and displaying the content on the display portion.

From the above, the service provider who provides connection between user terminals 10 and 20 and other services by operation and management of SIP server 50 is able to understand the utilization status of the service such as the frequency of video distribution and the like because both terminals are controlled by SIP call control.

### (Description of the operation)

Next, operation of the exemplary embodiment will be described in detail.

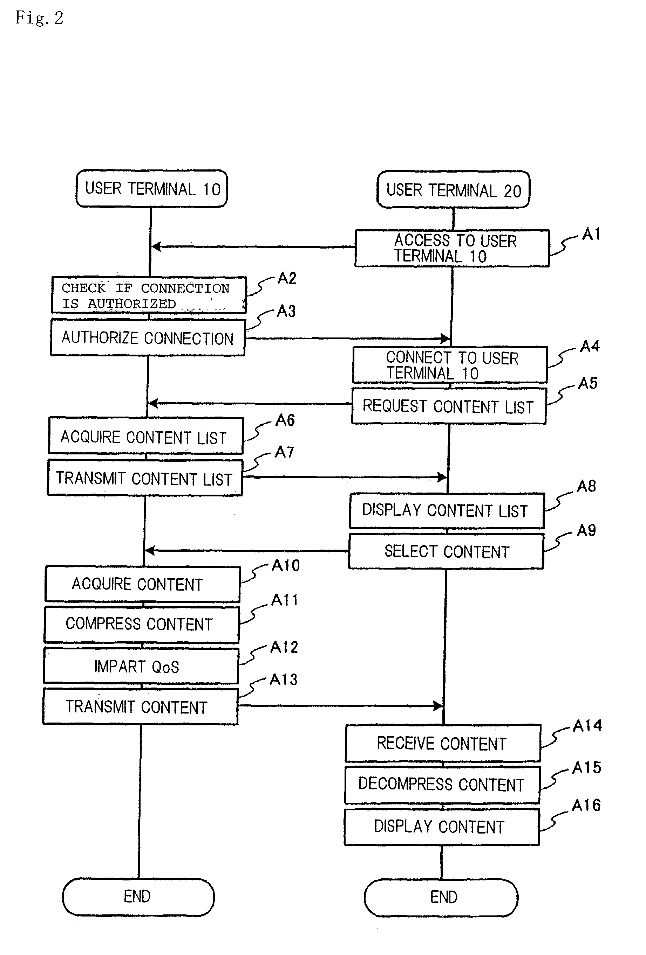

FIG. 2 is a diagram for illustrating the operation of a content distribution system of the exemplary embodiment. Specifically, this is a flow chart for illustrating the operation of a content distribution system when user terminal 20 is the content client side user terminal.

First, the user (the owner of user terminal 10) requests user terminal 20 (hereinafter called "information processing terminal 20") to make access to user terminal 10. Information processing terminal 20 makes access to user terminal 10 using SIP call control (Step A1).

As user terminal 10 is accessed by SIP call control from information processing terminal 20, user terminal 10 checks whether information processing terminal 20 is a connection-authorized terminal as a security authentication check (Step A2). When information processing terminal 20 is confirmed to be a connection-authorized terminal, user terminal 10 starts establishment of a call connection (session) with information processing terminal 20 using SIP call control (Step A3). Then a call connection between user terminal 10 and information processing terminal 20 is established (Step A4).

Next, the user transmits an acquisition request for a content list from information processing terminal 20 to user terminal 10 in order to select content to watch (Step A5). User terminal 10, when receiving the acquisition request for a content list, controls content storage device 30 and acquires the content list inside content storage device 30 (Step A6). User terminal 10 then transmits the obtained content list to information processing terminal 20 (Step A7). Information processing terminal 20, as receiving the content list, displays the content list on motion picture reproducing device 40 (Step A8).

Next, the user checks the displayed content list and selects content to use. Information processing terminal 20 transmits a usage request of the selected content to user terminal 10 (Step A9).

User terminal 10, when receiving the usage request, controls content storage device 30 and acquires the requested content in a streaming form (Step S10). User terminal 10 compresses the acquired content (Step A11). This is done to transmit the content efficiently. Further, user terminal 10 subjects the compressed content to a QoS process to reserve a band (Step A12). User terminal 10 distributes the content that has been QoS-processed to information processing terminal 20 by way of SIP server 50 (Step A13).

Information processing terminal 20 receives the content (Step A14). This content is free from delay and packet loss because the band has been reserved by QoS. Subsequently, information processing terminal 20 decompresses the received content (Step A15). Then, information processing terminal 20 outputs the decompressed content to motion picture reproducing device 40 and displays it on motion picture reproducing device 40 (Step A16).

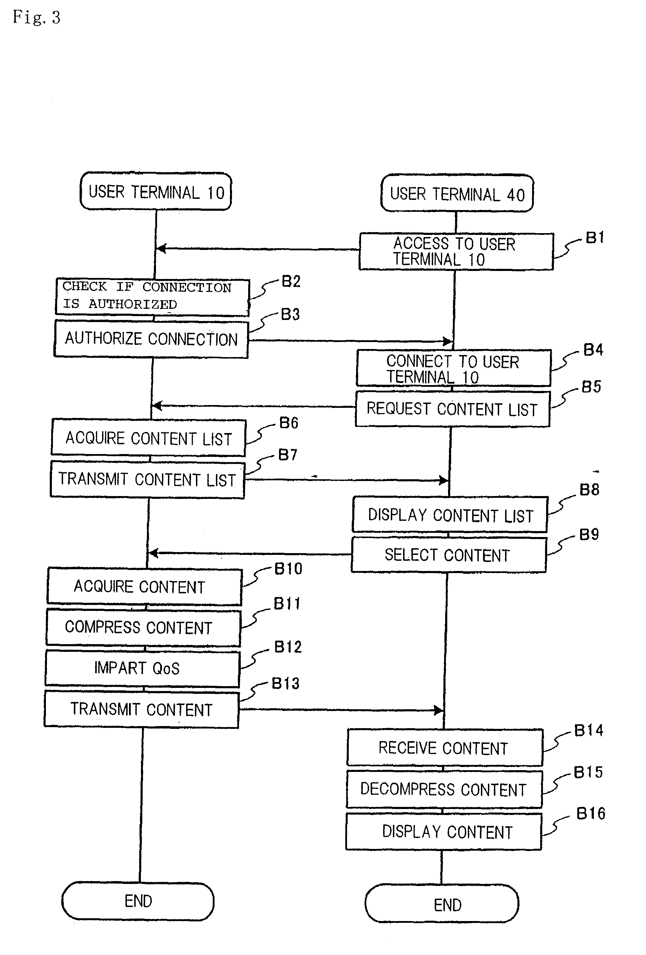

FIG. 3 is a diagram for explaining another operation of a content distribution system of the exemplary embodiment. Specifically, FIG. 3 is a flow chart for illustrating the operation of a content distribution system when user terminal 60 is the content client side user terminal.

First, the user requests user terminal 60 (hereinafter called "mobile information terminal 60") to make access to user terminal 10. Mobile information terminal 60 makes access to user terminal 10 using SIP call control (Step B1).

As user terminal 10 is accessed by SIP call control from the mobile information terminal, user terminal 10 checks whether mobile information terminal 60 is an authorized terminal as a security authentication request (Step B2). When mobile information terminal 60 is confirmed to be an authorized terminal, user terminal 10 starts establishment of a call connection to mobile information terminal 60 using SIP call control (Step B3). Then a call connection between user terminal 10 and mobile information terminal 60 is established (Step B4).

Next, the user transmits an acquisition request for a content list from mobile information terminal 60 to user terminal 10 in order to select content to use (Step B5). User terminal 10, when receiving the acquisition request for a content list, controls content storage device 30 and acquires the content list stored in content storage device 30 (Step B6). User terminal 10 then transmits the obtained content list to mobile information terminal 60 (Step B7). Mobile information terminal 60, when receiving the content list, displays the content list on the display portion (Step B8).

Next, the user checks the displayed content list and selects content to use. Mobile information terminal 60 transmits a usage request of the selected content to user terminal 10 (Step B9).

User terminal 10, when receiving the usage request, controls content storage device 30 and acquires the requested content in a streaming form (Step S10). User terminal 10 compresses the acquired content (Step B11). This is done to transmit the content efficiently by way of network 100. Further, user terminal 10 subjects the compressed content to a QoS process to reserve a band (Step B12). User terminal 10 distributes the content that has been QoS-processed to mobile information terminal 60 by way of SIP server 50 (Step B13).

Mobile information terminal 60 receives the content (Step B14). This content is free from delay and packet loss because the band has been reserved by QoS. Subsequently, mobile information terminal 60 decompresses the received content (Step B15). Then, mobile information terminal 60 displays the decompressed content on the display portion (Step B16).

Next, as an exemplary embodiment of the present invention, a more specific configuration and operation of the user terminal (information processing terminal or mobile information terminal) that constitutes the content distribution system will be described. The exemplary embodiment will be described taking an example in which user terminal (information processing terminal) 20 including motion picture reproducing device 40 is used as a user terminal. Here, when user terminal (mobile information terminal) 60 including a display portion is used as a user terminal, motion picture reproducing device 40 may be replaced with a display portion for displaying the countent. Further, the configurations and operations of other components in user terminal (mobile information terminal) 60 are the same as in user terminal (information processing terminal) 20.

### [Exemplary embodiment 1]

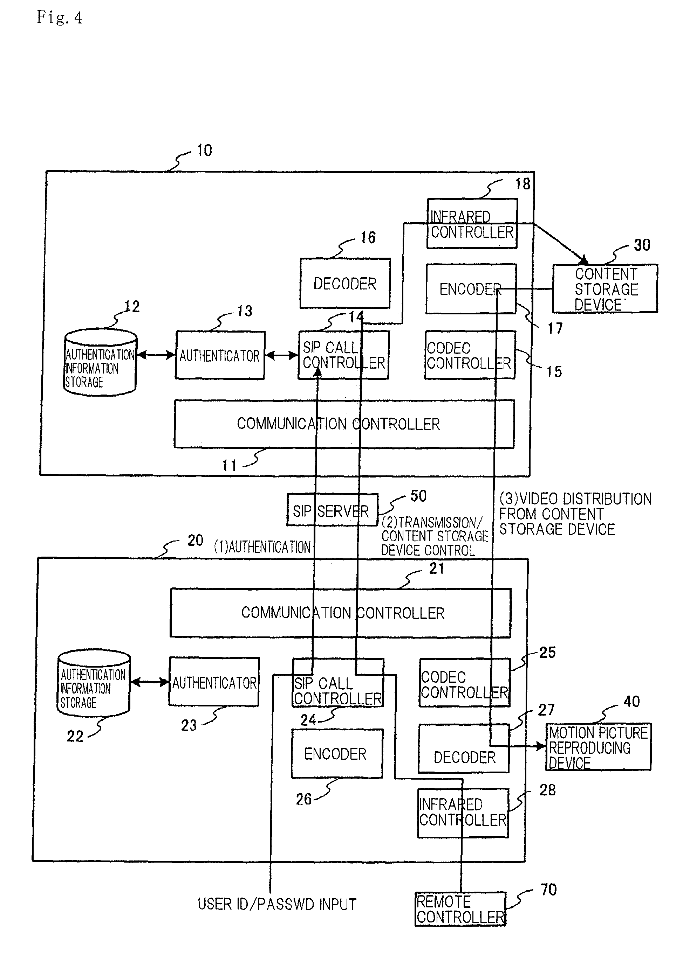

FIG. 4 is a block diagram showing a content distribution system of the first exemplary embodiment of the present invention. Specifically, FIG. 4 shows the configuration of user terminals 10 and 20. FIG. 4 also shows the signal flow during authentication (terminal authentication) for permitting user terminal 20 to use content storage device 30 that is connected to user terminal 10, the signal flow when content storage device 30 is controlled by user terminal 20 by means of remote controller 70, and the signal flow during transmission and reception of content Here, for terminal authentication, user ID (Identification) and the password of the user are used.

User terminal 10 on the content server side includes communication controller 11, authentication information storage 12, authenticator 13, SIP call controller 14, codec controller 15, decoder 16, encoder 17 and infrared controller 18. The functions of these components are as follows.

Communication controller 11 performs communication control at the IP level such as TCP/IP (Transmission Control Protocol/Internet Protocol), UDP (User Datagram Protocol) and the like. Also, communication controller 11 distributes content inside content storage device 30 using QoS. For example, communication controller 11 imparts QoS information for securing a communication band to the headers of the packets containing content.

Authentication information storage 12 stores user IDs, passwords etc., as authentication information (which will be referred to hereinbelow as terminal authentication information) for authenticating user terminals. Hereinbelow, terminal authentication information is assumed to be of a user ID and password.

Authenticator 13 previously registers a user ID and password as terminal authentication information in authentication information storage 12. Also, authenticator 13 reads out the terminal authentication information necessary for authentication (terminal authentication) performed by SIP call controller 14 when authentication is requested by user terminal 20, and outputs the terminal authentication information to SIP call controller 14.

SIP call controller 14, when an authentication request based on a user ID and password from user terminal 20 is made, performs terminal authentication by comparing the user ID and password with the terminal authentication information output from authenticator 13. Also, SIP call controller 14 establishes a secession with the authorized user terminal by SIP call control. Further, SIP call controller 14 remote-controls content storage device 30 in accordance with the control signal based on an infrared control command and the like from remote controller 70.

Codec controller 15 effects packetization of the content to be distributed and header processing for designating packet division, the order of display, transmission speed, etc. and the like. Encoder 17 compresses and encodes the distributed content output from content storage device 30 and outputs the result to codec controller 15.

Infrared controller 18 outputs infrared control commands for controlling content storage device 30, such as start of playback, stop of playback, select, fast forward etc. to content storage device 30. Here, a control command is output when SIP call controller 14 remote-controls content storage device 30 in accordance with the control signal received from user terminal 20. A control signal is generated by user terminal 20 based on the infrared control signal from remote controller 70.

It should be noted that each component of user terminal 10 also has the function of a user terminal on the client side, and the function is the same as that of each component of aftermentioned user terminal 20.

User terminal 20 on the content client side includes communication controller 21, authentication information storage 22, authenticator 23, SIP call controller 24, codec controller 25, encoder 26, decoder 27 and infrared controller 28. The function of each component is as follows.

Communication controller 21 performs communication control at the IP level such as TCP/IP, UDP and the like. Also, communication controller 21 receives packets from user terminal 20 and processes the QoS information added to the packets.

Using SIP call control, SIP call controller 24 transmits the user ID and password input by the user and a control signal based on a control command from remote controller 70 to user terminal 10. Also, SIP call controller 24 establishes communication (session) with another user terminal. Further, SIP call controller 24 transmits a control signal based on an infrared control command from remote controller 70 to user terminal 10.

Codec controller 25 receives packets containing content and extracts the distributed content from the packets, based on the header information such as packet division, the order of display and the transmission speed of the packets Decoder 27 decompresses and decodes the distributed content to output the distributed content on motion picture reproducing device 40.

Infrared controller 28 receives an infrared control command based on the user's remote control, from remote controller 70. Here, remote control is an example of input control. Infrared controller 28, based on the control command, generates a control signal for controlling the stop or start of playback, program select, fast forward etc., of content storage device 30 of user terminal 10, and outputs the control signal to SIP call controller 24.

Each component of user terminal 20 on the client side also has the function of a user terminal on the server side, and the function is the same as that of each component of the aforementioned user terminal 10.

### (The operation of the first exemplary embodiment)

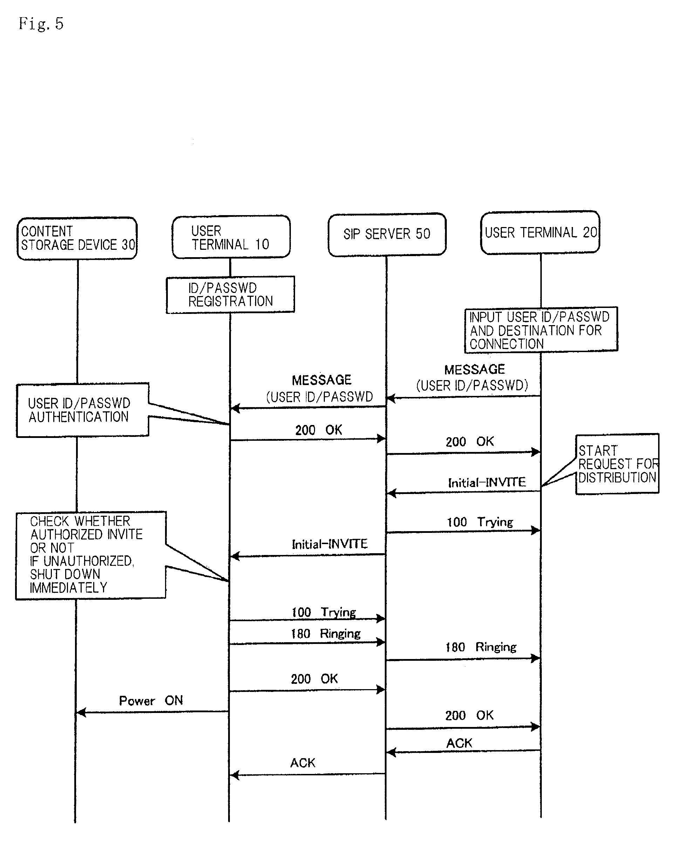

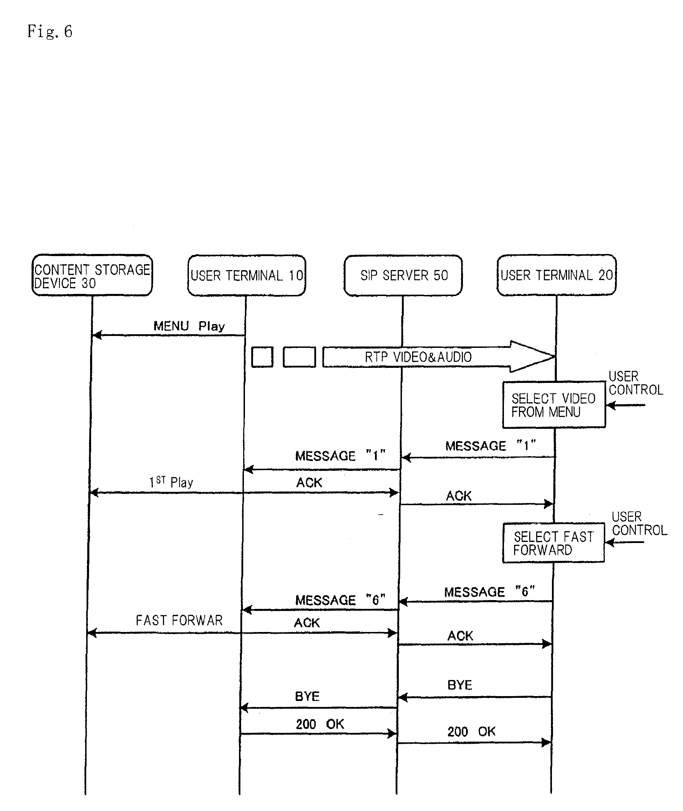

FIGS. 5 and 6 are sequence diagrams for explaining SIP call control and the operation of content distribution in the content distribution system of the first embodiment. Hereinafter, the operations of terminal authentication, remote control and content distribution will be described with reference to FIGS. 4 to 6.

The owner (user) of user terminal 10 inputs a user ID and password as advanced registration (initial settings) through a keyboard, remote controller 70 or the like. On the other hand, content (video data etc.) is stored in content storage device 30.

User terminal 20 is assumed to be at a place away from home such as the user's friend's house or the like. The user inputs the user ID and password and a destination to be connected (user terminal 10) and other identification information into user terminal 20 to make request for authentication and connection. SIP call controller 24 of user terminal 20, when receiving the request, transmits a message "MESSAGE (USER ID/PASSWD)" including an authentication request that contains the USER ID and PASSWD as terminal authentication information. SIP server 50, when receiving the message, transmits the message to user terminal 10. SIP call controller 14 of user terminal 10, when receiving the message, performs terminal authentication based on the USER ID and PASSWD of the MESSAGE and the registered user IDs and passwords which authenticator 13 has read out from authentication information storage 12. When authentication has been proved, SIP call controller 14 transmits an OK message "200 OK" that indicates the request has been accepted, to user terminal 20 by way of SIP server 50.

Next, the user starts a distribution request (transmission) from remote controller 70, a keyboard or the like. SIP call controller 24 of user terminal 20, when receiving the distribution request, transmits an INVITE message "Initial-INVITE" for establishing a session together with identification information on user terminals 20 and 10 to SIP server 50. Each item of identification information is given in URI (Uniform Resource Identifier) format. SIP sever 50, when receiving these pieces of information, starts a requesting process and sends back an in-process message "100 Trying" that indicates that the requesting process is in progress to user terminal 20. SIP server 50 also transmits an INVITE message to user terminal 10.

SIP call controller 14 of user terminal 10, when receiving the INVITE message, transmits the in-process message "100 Trying" to SIP server 50 and checks whether or not the INVITE message has been an authorized INVITE message.

When the INVITE message is an authorized INVITE message, SIP call controller 14 transmits to user terminal 20 an in-calling message "180 Ringing (calling process)" that indicates calling is in progress, and also transmits an OK message "200 OK" to user terminal 20. Then SIP call controller 14 outputs a power activation control signal "Power ON" by way of infrared controller 18 to content storage device 30 to turn on content storage device 30.

Here, if the INVITE message is an INVITE message that has not been authorized, call controller 14 cuts off the SIP call control with user terminal 20.

Next, when the INVITE message is an authorized INVITE message, SIP call controller 24 of user terminal 20, when receiving an OK message "200 OK" from user terminal 10, transmits an ACK response that indicates acceptance of session establishment to user terminal 10 by way of SIP server 50. This completes establishment of a session.

Further, as shown in FIG. 6, user terminal 10, when receiving the ACK response, switches the setting of content storage device 30 into content playback "MENU Play" by way of infrared controller 18. Content storage device 30 transmits the recorded content as playback data to encoder 17 of user terminal 10. Encoder 17 receives the playback data from content storage device 30 and compresses and encodes the playback data. Codec controller 15 packetizes the encoded playback data. Communication controller 11 adds QoS control information to the headers of the packets. In this way, the communication status in which distributed data (RTP video and sound) is distributed continuously to user terminal 20 is established on the session formed on network 100 equipped with SIP server 50.

In user terminal 20 communication controller 21 receives the packets by way of network 100. Codec controller 25 extracts playback data from the packets. Decoder 27 then decompress and decodes the playback data. Decoder 27 outputs the decompressed and decoded playback data to motion picture reproducing device 40. Motion picture reproducing device 40, when receiving the playback data, displays the playback data. Thus, the playback data can be watched.

In user terminal 20, the user is able to perform selection control of a desired video program from the video menu window displayed on motion picture reproducing device 40 by operating remote controller 70.

For example, the user selects playback of the first video by operating remote controller 70. In this case, in user terminal 20, infrared controller 28 picks up the control command that designates the playback of the first video and outputs a control signal based on the control command to SIP call controller 24. SIP call controller 24, when receiving the control signal, transmits a message "MESSAGE '143' " for requesting playback of the first video to user terminal 10 by way of SIP server 50. SIP call controller 14 of user terminal 10, when receiving the message, outputs the aforementioned control signal to infrared controller 18. Infrared controller 18 outputs the infrared control command based on the control signal to content storage device 30. Content storage device 30, when receiving the control command, selects the setting for playing the first video. At this timing, user terminal 10 sends back an ACK response to user terminal 20 by way of SIP server 50.

Further, when the user directs a fast forward operation of the video during playback by operating remote controller 70, user terminal 20 transmits a message "MESSAGE '6'" that indicates a fast forward request to user terminal 10 in the same sequence of SIP call control as the above. Then content storage device 30 switches the setting of the video being played into fast forward mode.

When the user terminates watching the video and selects the power OFF by operating remote controller 70, user terminal 20 transmits a BYE request that indicates a request for session shutdown. When an OK message "200 OK" is received, user terminal 20 terminates the session connection by the same sequence of SIP call processing control as above.

### [Exemplary Embodiment 2]

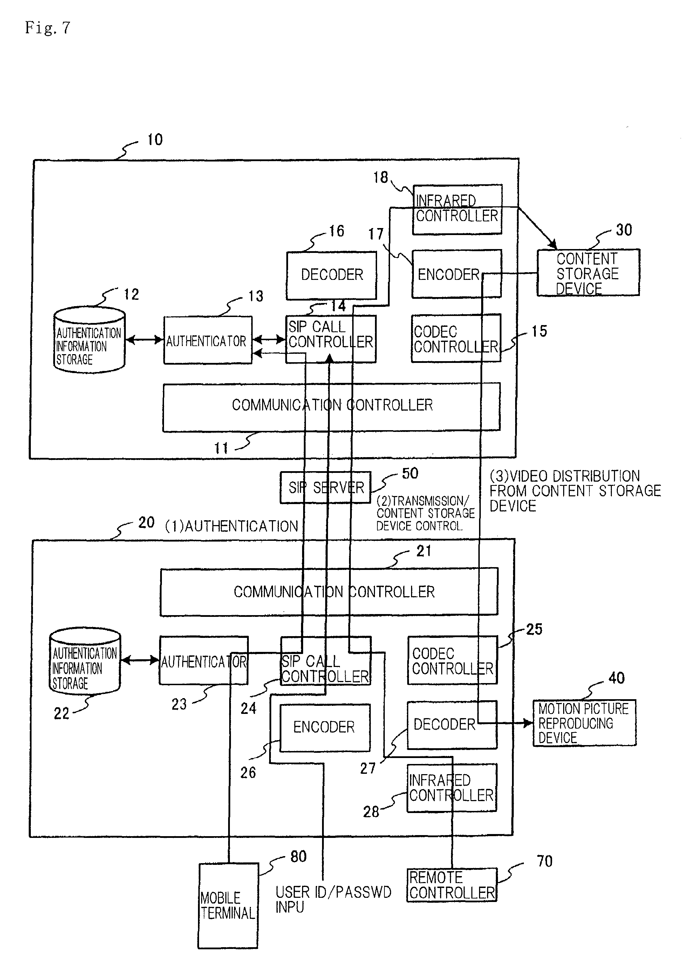

FIG. 7 is a block diagram showing a content distribution system of the second embodiment of the present invention. Specifically, FIG. 7 shows a configuration of user terminals 10 and 20 that ensures higher security than that in the first embodiment. FIG. 7 also shows the signal flow during authentication for permitting user terminal 20 to use content storage device 30 that is connected to user terminal 10, the signal flow when content storage device 30 is remote-controlled, and the signal flow during transmission and reception of ciphered content. Here, authentication includes terminal authentication using user ID and password as terminal authentication information and user authentication using authentication information (which will be referred to hereinafter as user authentication information) received from mobile terminal 80 such as a mobile phone etc.

The user authentication process authenticates whether or not the person who accesses user terminal 10 by way of user terminal 20 is the owner (user) of user terminal 10. The user authentication information is the terminal ID of mobile terminal 80.

User terminal 10 of the second embodiment includes communication controller 11, authentication information storage 12, authenticator 13, SIP call controller 14, codec controller 15, decoder 16, encoder 17 and infrared controller 18. Each component has the same function as in the first embodiment. In particular, authentication information storage 12, authenticator 13, SIP call controller 14 and encoder 17 further have the following functions for performing user authentication.

That is, authentication information storage 12 stores user authentication information in addition to the user ID and password. Authenticator 13 registers the terminal ID of mobile terminal 80 owned by the owner of user terminal 10 as user authentication information into authentication information storage 12. Further, authenticator 13 reads out user authentication information from authentication information storage 12 when an authentication request based on the terminal ID from user terminal 20 is made, and compares the user authentication information with the terminal ID to perform user authentication. Further, when authentication has been proved (when terminal authentication by SIP call controller 14 has also been proved), authentication 13 receives a key for ciphering by key exchange with the SIP server. Then authenticator 13 directs encoder 17 to cipher content using the key. Further, SIP call controller 14 receives a terminal ID and key from SIP call controller 24 of user terminal 20 and outputs the terminal ID and key to authenticator 13. Encoder 17 ciphers content inside content storage device 30 using the key for ciphering.

Further user terminal 20 of the second embodiment includes communication controller 21, authentication information storage 22, authenticator 23, SIP call controller 24, codec controller 25, encoder 26, decoder 27 and infrared controller 28. Each component has the same function as in the first embodiment. In particular, authenticator 23, SIP call controller 24 and decoder 27 further have the following functions for performing user authentication.

That is, authenticator 23 receives a terminal ID from mobile terminal 80 and outputs the terminal ID to SIP call controller 24. Authenticator 23 also performs key exchange with SIP server 50 and sends the key for ciphering to authenticator 13 of user terminal 10. Further, authenticator 23 directs decoder 27 to decode content using the sent key. SIP call controller 24 receives a user ID, password and terminal ID from the user, and transmits the user ID, password and terminal ID to SIP call controller 14 of user terminal 10. Decoder 27, in accordance with the request for decoding, decodes the ciphered content using the key and outputs the content to motion picture reproducing device 40.

### (The operation of the second exemplary embodiment)

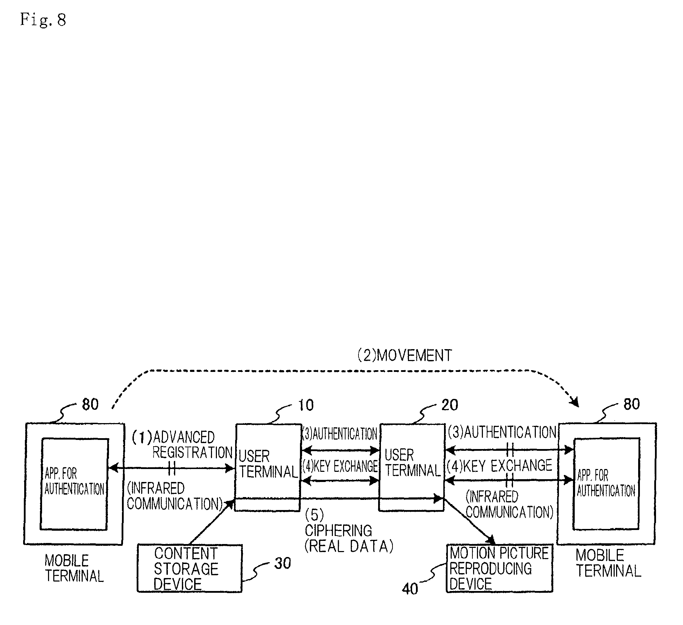

FIG. 8 is a diagram showing the method of user authentication and key transmission using a mobile terminal of the second exemplary embodiment.

The method of user authentication and key transmission of this exemplary embodiment is carried by starting up an application for authentication installed in mobile terminal 80 owned by the owner of user terminal 10. The sequence of this method is as follows.
(1) The owner (user) of user terminal 10 performs advanced registration. Specifically, the user inputs the terminal ID of mobile terminal 80 into user terminal 10 as its authentication information by means of the infrared communication function or the like of its own mobile terminal 80 so that the terminal ID is stored into authentication information storage 12 by way of authenticator 13.
(2) The user carrying mobile terminal 80 goes to a place such as a friend's house or the like where user terminal 20 is installed.
(3) The user starts up the application for authentication of mobile terminal 80. The user, by using the infrared communication function or the like of mobile terminal 80, inputs its terminal ID to user terminal 20 to request user terminal 10 for user authentication.
(4) When user authentication has been proved at user terminal 10, a key for ciphering is sent from mobile terminal 80 to user terminal 10. This key sending is done by performing key exchange between mobile terminal 80 and user terminal 20 and then by performing key exchange between user terminal 10 and user terminal 20. By this process, the ciphering key is shared by user terminal 10 and user terminal 20.
(5) User terminal 10 ciphers content using the received key while user terminal 20 decodes the ciphered content using the sent key.

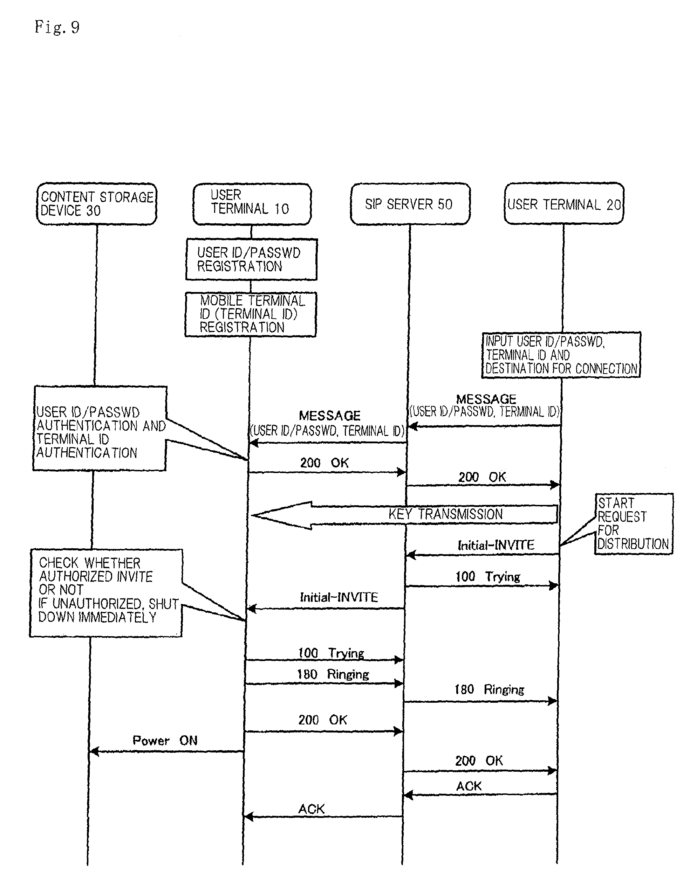

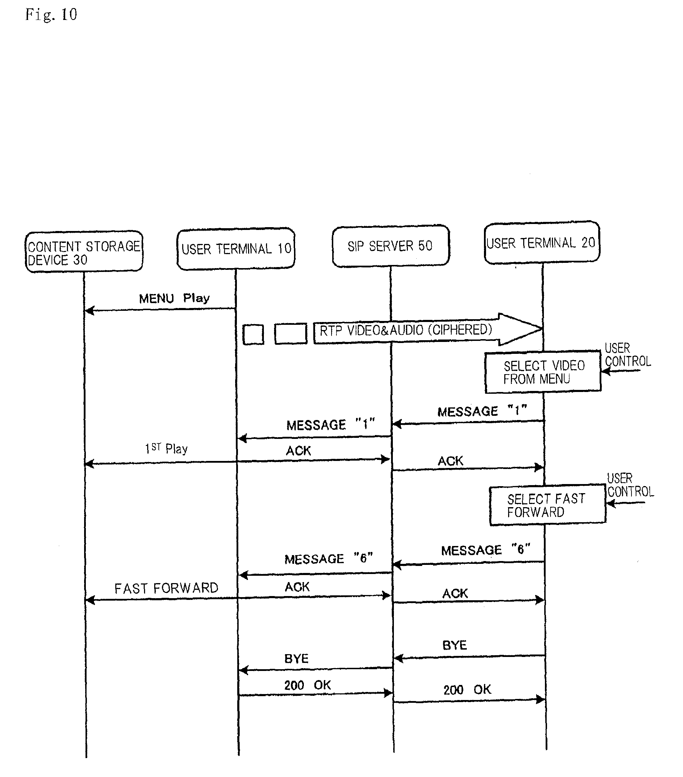

FIGS. 9 and 10 are sequence diagrams for explaining SIP call control and the operation of content distribution in the content distribution system of the second embodiment. Hereinafter, the operations of authentication, remote control and content distribution will be described with reference to FIGS. 7 to 10.

As shown in FIG. 9, the owner (user) of user terminal 10 inputs a user ID and password as advanced registration (initial settings) through a keyboard, remote controller or the like. Authenticator 13 registers the user ID and password into authentication information storage 12. Then, the user inputs a terminal ID into user terminal 10 from own mobile terminal 80. Authenticator 13 registers the terminal ID into authentication information storage 12.

After advanced registration is completed, the user inputs the user ID and password, terminal ID, a destination to be connected and other information into user terminal 20 at an external location such as a friend's home to make a request for authentication and connection. SIP call controller 24 of user terminal 20, when receiving the request, transmits a message "MESSAGE (USER ID/PASSWD and terminal ID)" including an authentication request that contains the USER ID, PASSWD and TERMINAL ID as terminal authentication information. SIP server 50, when receiving the message, transmits the message to user terminal 10.

SIP call controller 14 of user terminal 10 receives the user ID and password stored in authentication information storage 12, from authenticator 13 and performs terminal authentication using the user ID and password and the user ID/PASSWD in the received MESSAGE. SIP call controller 14 outputs the terminal ID of the received message to authenticator 13. Authenticator 13, when receiving the terminal ID, performs user authentication using the terminal ID and the terminal ID stored in authentication information storage 12. When authentication by both authenticator 13 and SIP call controller 14 has been proved, SIP call controller 14 transmits an OK message "200 OK" to user terminal 20 by way of SIP server 50.

When user terminal 20 receives the OK message, the user sends the key from mobile terminal 80 to user terminal 10 by way of user terminal 20. The key sending is done by performing key exchange between mobile terminal 80 and user terminal 20 first and then by performing key exchange between user terminal 10 and user terminal 20.

After sending the key, the user starts a distribution request (transmission) from remote controller 70, a keyboard or the like. SIP call controller 24 of user terminal 20, when receiving the distribution request, transmits INVITE message "Initial-INVITE" together with identification information on user terminals 20 and 10 in URI format to SIP server 50. SIP sever 50 sends back an in-process message "100 Trying" to user terminal 20. SIP server 50 also transmits an INVITE message to user terminal 10.

The operation from this point forward is the same as in the first embodiment. That is, SIP call control for session establishment is performed by the sequence of in-process message "100 Trying", in-calling "180 Ringing", OK message "200 OK", power activation control signal "Power ON" to content storage device 30 and ACK response. Further, as shown in FIG. 10, after playback "MENU Play" of the menu of distributed content in content storage device 30 has been operated, encoder 17 compresses the playback data of content storage device 30 and ciphers the data using the received ciphering key. Codec controller 15 packetizes it. Communication controller 11 adds QoS control information to the headers of the packets. In this way, the communication status in which distributed data (RTP video and sound (ciphered)) is distributed continuously to user terminal 20 is established on the session formed on network 100 with SIP server 50.

At this point, in user terminal 20, communication controller 21 receives the packets by way of network 100. Codec controller 25 extracts distributed content from the packets. Decoder 27 decodes the distributed content using the key and decompresses the compressed content. Decoder 27 outputs the decompressed content to motion picture reproducing device 40. Thus, the content can be watched.

In user terminal 20, the user is able to select a desired video program or the like from the video menu window displayed on motion picture reproducing device 40 by operating remote controller 70. Further, the user can also perform various kinds of control such as fast forward and others in content storage device 30 using remote controller 70. The control for performing such operations in accordance with the SIP call control using "MESSAGE '1"', ACK response, "MESSAGE '6"', "ACK response", BYE for session shutdown and OK message "200 OK" can also be done in the same manner as in the first exemplary embodiment.

### (Another exemplary embodiment)

In the exemplary embodiments heretofore, description was made taking an example in which content storage device 30 is controlled by infrared communication from user terminal 10, but it is possible to provide a system in which content storage device 30 is controlled by wired communication using cables etc., or by wireless communication. It is also possible to use wired communication or other wireless communication in place of infrared communication to effect communication between remote controller 70 and user terminal 20 and communication between user terminal 20 and motion picture reproducing device 40. Further, though the above description was made taking an example in which user terminal 20 is controlled by remote controller 70, it is possible to provide a system in which user terminal 20 is controlled by another input unit such a keyboard or the like.

Further, content storage device 30 is, for example a HDD (hard disk drive) unit, VTR (video tape recorder) unit or the like. Motion picture reproducing device 40 is, for example a TV (television) set.

In the first and second exemplary embodiments, the user terminal has the functions both of the content client and of the content server sides, and description was made taking user terminal 10 as being terminal on the content server side and user terminal 20 as being terminal one on the content client side. However, it is possible to configure a user terminal having a dedicated function of either the client side or server side.

In the second exemplary embodiment, when mobile information terminal 60 is used, because of its mobility it is possible to use mobile information terminal 60 as mobile terminal 80 for authentication. It is also possible to use the terminal ID of mobile information terminal 60 as user authentication information.

According to the exemplary embodiment, the content client side user terminal transmits terminal authentication information, user authentication information input from a mobile terminal to a content server side user terminal. The content server side user terminal performs terminal authentication and user authentication, based on the terminal authentication information and user authentication information received from the content client side user terminal, the terminal authentication information registered in advance and the user authentication information registered in advance at the mobile terminal. After both the authentications have been provided (authentication OK), the content server side user terminal establishes a session with the content client side user terminal and distributes content. The terminal authentication information is a user ID and password, and the user authentication information is the terminal ID of the mobile terminal.

Further, when both the terminal authentication and the user authentication at the authenticator have been proved, the content server side user terminal receives a key sent from the content client side user terminal and ciphers content with the key. The content client side user terminal decodes the content using the sent key.

The content client side user terminal is an information processing terminal that is connected to a motion picture reproducing device for displaying the content and outputs the received content to the motion picture reproducing device. The content client side user terminal is a mobile information terminal including a display portion for displaying the received content.

In the system including the content client side user terminal, content server side user terminal and network, QoS that performs band control such that a fixed communication speed is guaranteed is used. Accordingly, it is possible to secure a communication speed suitable for distributed content such as video and the like, hence the user is able to watch the distributed content without experiencing any problems.

In the content client side user terminal and content server side user terminal, content compressing/decompressing functions are provided. Accordingly, it is possible to transmit content through the network efficiently, hence improving the content quality.

Further, user authentication using the terminal ID of the mobile terminal owned by the owner is executed using authentication information about the owner of the content server side user terminal. Accordingly, it is possible to realize high security.

As described heretofore, when user terminals of the present exemplary embodiment are used, it is possible to remote control the content storage device installed at home from a place away from home. Further, it is possible to receive and watch content from the content storage device while are maintained high quality and high security.

While preferred embodiments of the present invention have been described using specific terms, such description is for illustrative purposes only, and it is to be understood that changes and variations may be made without departing from the spirit or scope of the following claims. This application is based upon and claims the benefit of priority from Japanese patent application No. 2006-339208, filed on December 15, 2006, the disclosure of which is incorporated herein in its entirety by reference.

An embodiment of the invention may be summarized as a system which includes a network including a SIP server, a content server side user terminal, connected to the aforementioned network and to content storage device and having a SIP control function of distributing playback content such as video, audio, etc., in the aforementioned content storage device by QoS band reservation; and a content server side user terminal, connected to the aforementioned network and motion picture reproducing device and having a SIP control function of outputting content such as video, audio, etc. distributed through the aforementioned network, to the aforementioned motion picture reproducing device or a display portion.

## Claims

1. A content distribution system comprising:
a network including a SIP server;
content server side user terminal means for connecting to said network and to a content storage device, and controlled by SIP call control by way of said network for distributing content inside said content storage device using QoS that reserves a band; and
content client side user terminal means for connecting to said network for controlling said content server side user terminal means by SIP call control by way of said network and for receiving said distributed content to output the content.

2. The content distribution system according to Claim 1, wherein said content client side user terminal means transmit a control signal based on a user's input control to a content server side user terminal means, and
said content server side user terminal means receives said control signal and controls said content storage device in accordance with the control signal to control the distribution of said content.

3. The content distribution system according to Claim 2, wherein said content client side user terminal means receives an infrared control command based on said input control from a remote controller and transmits a control signal based on the control command, and
said content server side user terminal means transmits an infrared control command in accordance with said control signal to said content storage device to control said content storage device.

4. The content distribution system according to any one of Claims 1 through 3, wherein said content server side user terminal means transmits said content after compressing and encoding and packetizing it, and
said content client side user terminal means, when receiving said packet, extracts compressed and encoded content from the packet and decompresses and decodes the extracted content.

5. The content distribution system according to any one of Claims 1 through 4, wherein said content client side user terminal means transmits terminal authentication information to said content server side user terminal means, and
said content server side user terminal means performs terminal authentication, based on terminal authentication information registered in advance and the terminal authentication information received from said content client side user terminal means, and establishes a session with said content client side user terminal means when the terminal authentication has been proved, then distributes said content.

6. The content distribution system according to any one of Claims 1 through 4, wherein said content client side user terminal means transmits terminal authentication information, user authentication information input from a mobile terminal means to a content server side user terminal means;
said content server side user terminal means performs terminal authentication, based on terminal authentication information registered in advance and the terminal authentication information received from said content client side user terminal means and also performs user authentication, based on the user authentication information registered in advance from the mobile terminal means and the user authentication information received from said content client side user terminal means, and establishes a session with said content client side user terminal means when both the terminal authentication and the user authentication have been proved, then distributes said content.

7. The content distribution system according to Claim 6, wherein said terminal authentication information is a user ID and password, and said user authentication information is the terminal ID of said mobile terminal means.

8. The content distribution system according to Claim 6 or 7, wherein when both said terminal authentication and said user authentication have been proved, said content server side user terminal means receives a ciphering key sent from said content client side user terminal means and ciphers said content with the key, and
said content client side user terminal means decodes said content.

9. The content distribution system according to any one of Claims 1 through 8, wherein said content client side user terminal means is connected to a motion picture reproducing device for displaying said content and outputs said content to said motion picture reproducing device.

10. The content distribution system according to any one of Claims 1 through 8, wherein said content client side user terminal means includes a display portion and displays said content on said display.

11. A content server side user terminal comprising:
SIP call control means for establishing a session with a content client side user terminal on a network including a SIP server, using a SIP call control function; and
communication control means for distributing content on said session, using QoS that reserves a band.

12. The content server side user terminal according to Claim 11, which is connected to content storage means for storing said content, wherein said SIP call control means receives a control signal which said content client side user terminal transmits by a SIP call function, controls said content storage means in accordance with the control signal to control distribution of said content.

13. The content server side user terminal according to Claim 12, wherein said content storage means is controlled by control commands, further including an infrared control means for transmitting an infrared control command based on a control signal received by said SIP call control means to control said content storage device.

14. The content server side user terminal according to any one of Claims 11 through 13, further comprising:
encode means for compressing and encoding said content;
codec control means for packetizing the content that has been compressed and encoded by said encode means portion and outputs the packet to said communication control means.

15. The content server side user terminal according to any one of Claims 11 through 14, wherein said SIP call control means performs terminal authentication, based on terminal authentication information registered in advance and the terminal authentication information received from said content client side user terminal, and establishes a session with said content client side user terminal when the terminal authentication has been proved.

16. The content server side user terminal according to any one of Claims 11 through 14, further comprising authentication means for performing user authentication, based on the user authentication information registered in advance from a mobile terminal and the user authentication information received from said content client side user terminal, wherein said SIP call control means performs terminal authentication, based on the terminal authentication information registered in advance and the terminal authentication information received from said content client side user terminal and establishes a session with said content client side user terminal when both the terminal authentication and the user authentication have been proved.

17. The content server side user terminal according to Claim 16, wherein said terminal authentication information is a user ID and password, and said user authentication information is the terminal ID of said mobile terminal.

18. The content server side user terminal according to Claim 16 or 17, wherein when both said terminal authentication and said user authentication have been proved, said communication control means receives a ciphering key sent from said content client side user terminal, further comprising encode means for ciphering said content with the key received by said communication control means.

19. A content client side user terminal comprising:
SIP call control means for establishing a session with a content server side user terminal on a network including a SIP server, using a SIP call control function; and
communication control means for receiving content from said content server side user terminal on said session, using QoS that reserves a band.

20. The content client side user terminal according to Claim 19, wherein said SIP call control means receives a control signal based on user's input control, transmits said control signal to said content server side user terminal using SIP call control to control a content storage means storing content, connected to said content server side user terminal to distribute said content.

21. The content client side user terminal according to Claim 20, further comprising infrared control means for receiving an infrared control command based on said input control, from a remote control means and for outputting a control signal based on the control command to said SIP call control means.

22. The content client side user terminal according to any one of Claims 19 through 21, further comprising:
codec control means for extracting compressed and encoded content from the packet received by said communication control means; and
decode means for decompressing and decoding said extracted content.

23. The content client side user terminal according to any one of Claims 19 through 22, wherein said SIP call control means transmits terminal authentication information to said content server side user terminal and establishes said session when terminal authentication is proved at said content server side user terminal.

24. The content client side user terminal according to any one of Claims 19 through 22, wherein said SIP control means transmits terminal authentication information and user authentication information input from a mobile terminal to the content server side user terminal, and establishes said session when both the terminal authentication and the user authentication have been proved at said content server side user terminal.

25. The content client side user terminal according to Claim 24, wherein said terminal authentication information is a user ID and password, and said user authentication information is the terminal ID of said mobile terminal.

26. The content client side user terminal according to Claim 24 or 25, which sends a ciphering key for said content to said content server side user terminal when both the terminal authentication and the user authentication have been proved at said content server side user terminal.

27. The content client side user terminal according to any one of Claims 19 through 26, which is connected to a motion picture reproducing device for displaying said content and which outputs said content to said motion picture reproducing device.

28. The content client side user terminal according to any one of Claims 19 through 26, further comprising indication means for display said content.

29. An authentication method for a content distribution system including: a network including a SIP server; a content server side user terminal connected to said network and a content storage device for distributing content inside said content storage device through said network, using QoS that reserves a band and a SIP call control function; and a content client side user terminal connected to said network for receiving said distributed content using a SIP call control function and for outputting the content,
said content server side user terminal, registering, in advance, a terminal ID of a mobile terminal as user authentication information,
said content client side user terminal, receiving said terminal ID from said mobile terminal as user authentication information, transmitting the
terminal ID to said content server side user terminal to request user authentication that proves that a person accessing said content server side user terminal is an owner of the content server side user terminal.

30. The authentication method according to Claim 29, wherein when user authentication has been proved at said content server side user terminal, said content client side user terminal sends a ciphering key for said content to said content server side user terminal.

31. The authentication method according to Claim 30, wherein, in regard to sending said key, said ciphering key is shared between said content server side user terminal and said content client side user terminal by sending the key from said mobile terminal to said content client side user terminal and by sending the key from said content side user terminal to said server client side user terminal.

32. The authentication method according to Claim 30 or 31, wherein, for said advanced registration, said user authentication information is registered by infrared communication between said mobile terminal and said content server side user terminal.

33. The authentication method according to Claim 31 or 32, wherein transmission of the key from said mobile terminal to said content client side user terminal is performed by infrared communication between said mobile terminal and said content client side user terminal.

34. The authentication method according to any one of Claims 29 through 33, further comprising the steps of:
registering a user ID and password, in advance, in said content server side user terminal; and
requesting authentication by inputting a user ID and password to said content client side user terminal.
